# EUROPEAN PATENT APPLICATION

(11) **EP 1 774 844 A2**
(43) Date of publication of application: **18.04.2007**
(21) Application number: 06121638.8
(22) Date of filing: 02.10.2006
(51) Int. Cl.: A01C 23/02, A01B 33/02, A01C 5/06

(54) **Applicator with rotating disc coulter**

(30) Priority: 30.09.2005 DK 200501380
(71) Applicant: Sørensen, Harry Højvang, 6818 Årre (DK)
(72) Inventor: Sørensen, Harry Højvang, 6818 Årre (DK)
(74) Representative: Holme Patent A/S

(57) **Abstract**

The invention relates to an applicator for forming at least one application groove in porous surfaces, wherein the applicator during operation has a forward travel speed along the ground surface, and wherein the applicator comprises a rotating, profiled disc coulter for forming the application groove, wherein the least one disc coulter is mounted in such a way that it rotates at a peripheral speed which is different from the above forward travel speed. The invention relates to application of material in porous surfaces and a slurry applicator for application of slurry.

Furthermore, an applicator is obtained, which due to the profiled disc coulter forms an uneven groove which prevents the slurry from running. An additional advantage of the applicator is the formation of a porous bottom and side - which results in fast absorption of the slurry whereby the slurry does not run off. Furthermore, less power has to be used to form the application groove as the rotation of the disc coulter itself helps it pass through the surface.

## Description

The present invention relates to an applicator forming at least one application groove in porous surfaces, such as e.g. soil. The invention furthermore relates to a method for forming an application groove for application of material in porous surfaces. Finally, the invention relates to a slurry applicator for application of slurry wherein the slurry applicator comprises an applicator for forming at least one application groove in porous surfaces, such as soil.

### Background

A slurry applicator serves for injecting slurry in the soil, for example a grass field, in connection with enrichment of this soil. The principle is that the slurry applicator is drawn behind a vehicle wherein the applicator forms a groove into which slurry is injected, and wherein the groove subsequently possibly is covered. Unlike slurry spreading by means of a system of hoses, this process results in minimizing of odour nuisances. In addition, it has the advantage of ensuring that the slurry stays where it has been injected.

In connection with application of slurry it is known to use slurry applicators comprising an applicator tooth wherein the applicator tooth is drawn at a depth in the topsoil and thereby forms a groove in the soil into which slurry is injected. In this connection the topsoil is defined to be about 50 cm.

From EP 1023824 it is known to use an applicator wherein the applicator comprises rotating shares mounted so that they rotate in a zigzag movement.

French Patent FR 2,619,670 describes an applicator which forms at least one application groove wherein the rolling coulter rotates at another speed than the travel speed of the applicator. This invention does not provide a porous groove suited for absorbing slurry. The patent specification is silent on how to improve absorption capacity.

The European Patent EP 288 173 A1 describes an applicator in which use is made of a zigzag wheel which cuts a sharp groove in the soil, which a resilient arm having a slurry outlet can follow. This sharp groove does not provide a porous and absorbent surface in the soil, and the absorption capacity of the groove is therefore poor.

A problem of the above known techniques is that a relatively firm groove is formed as the soil is compacted in the sides of the groove. This means that the slurry is not absorbed in the sides of the groove, and the compacted sides of the groove furthermore result in the slurry running in the longitudinal direction of the groove for example on sloping grounds.

### Object and description of the invention

It is an object to find a solution to the above problems.

According to the invention, this is obtained by means of an applicator for forming at least one application groove in porous surfaces, such as soil, wherein the applicator during operation has a forward travel speed along the ground surface, and wherein the applicator comprises at least one rotating, profiled disc coulter for forming the at least one application groove, wherein the least one disc coulter is mounted in such a way that it rotates at a peripheral speed which is different from the above forward travel speed. The forward travel speed and the peripheral speed are both measured in meters per second.

In this connection, soil is defined as a general term for material in which crops usually grow and therefore comprises both e.g. sand, clay and the like and blends thereof. Soil can furthermore comprise stubble residues or plant components, for example after harvesting of crops.

Thereby, an applicator is obtained, which can drive in stubble residues since the rotary coulter can drive over the stubble residues and/or cut through the stubble residues and their root system. Furthermore, an applicator is obtained, which due to the profiled disc coulter forms an uneven groove, which keep the slurry from running in the longitudinal axis of the groove. An additional advantage of the applicator is the formation of a porous bottom and side - which results in fast absorption of the slurry whereby the slurry does not run along the groove. Furthermore, less power has to be used to form the application groove as the rotation of the disc coulter itself helps it pass through the surface.

In one embodiment, the disc coulter rotates at a peripheral speed which is higher than the forward travel speed.

Thereby, the disc coulter forms an application groove by making a sort of wheel spin. This can be an advantage in case of very hard soil or soil with many roots since the disc coulter easier can cut the items due to the high speed.

In this embodiment, the disc coulter rotates at a peripheral speed which is lower than the forward travel speed.

In this way, the application groove is formed by a partial ploughing and this contributes to improving the quality of the application groove.

In one embodiment, the applicator furthermore comprises a rotating depth guide in form of a depth wheel or depth roller rotating on the surface. The depth to which the disc coulter sinks into the ground depends on the vertical position of the depth roller in relation to the disc coulter.

In one embodiment, the depth guide and at least one disc coulter are rotationally connected by means of a gearing.

This is a simple and inexpensive way of obtaining a disc coulter having a peripheral speed different from a that of a depth guide. In case the gearing is such that the disc coulter rotates at a speed which is lower than the forward travel speed, this means that the braking energy partly can be transferred to the wheel or rollers of the depth guide.

In one embodiment, the applicator comprises a braking assembly mounted so that it reduces the peripheral speed of the disc coulter so that the disc coulter rotates at a peripheral speed which is lower than the forward travel speed.

The braking assembly could e.g. be a disc brake or the like and is another simple way of ensuring that the disc coulter rotates at a peripheral speed which is lower than the forward travel speed.

In one embodiment, the disc coulter is profiled in a wave pattern or a zigzag pattern.

This improves the quality of the groove by making it uneven and the sides porous. At the same time, a wide groove is obtained.

In one embodiment, the distance from the top to the bottom of the profiling of the disc coulter varies in such a way that the distance is largest along the periphery and the distance is reduced towards the centre of the disc coulter.

The invention furthermore relates to a slurry applicator for application of slurry wherein the slurry applicator comprises an applicator as described above.

The invention furthermore relates to a method for forming an application groove for application of material in porous surfaces, wherein an applicator of a forward travel speed is used that comprises a rotating, profiled disc coulter for forming an application groove, wherein the disc coulter rotates at a peripheral speed which is different from said forward travel speed.

In one embodiment, the disc coulter rotates at a peripheral speed which is lower than the forward travel speed.

In one embodiment, the disc coulter rotates at a peripheral speed which is higher than the forward travel speed.

### Brief description of drawing

In the following, the invention is described with reference to the drawing, in which
fig. 1 is a plan view of a slurry applicator comprising a number of applicators according to the invention,
fig. 2A is a side elevational view of an applicator,
fig. 2B is a perspective view of an applicator,
fig. 3 shows an embodiment of an applicator comprising a gearing between depth guide and disc coulter.

### Description of embodiments

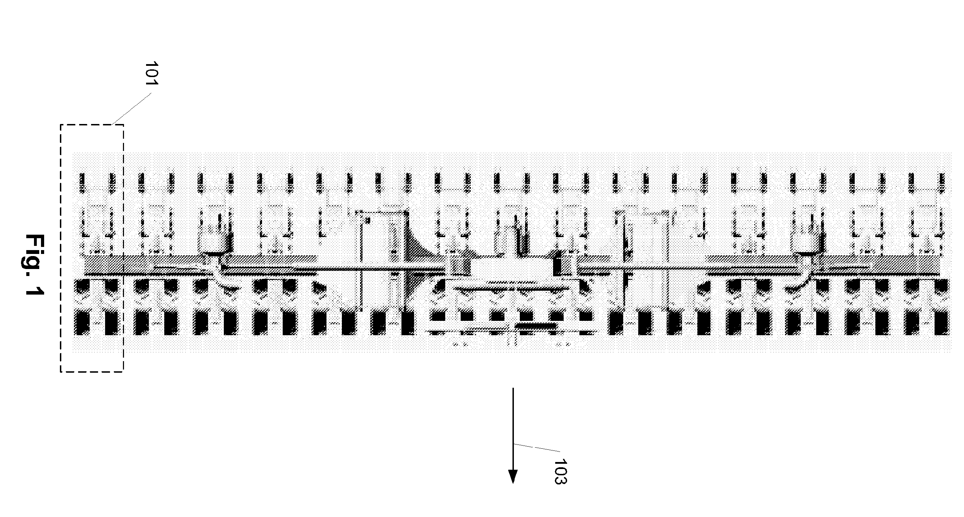

Fig. 1 shows an applicator according to the invention. The slurry applicator comprises fifteen applicators 101 according to the invention, they are interconnected in a row. The slurry applicator functions by the slurry applicator in connection with application of slurry in soil being drawn along the ground in a direction illustrated by the arrow 103 at a forward travel speed. This can e.g. be done by a tractor connected to the slurry applicator, or the slurry applicator can be a permanent part of a vehicle. The slurry applicator is furthermore connected to a slurry tanker and functions in such a way that when it is moved across the surface of the ground, the applicators form application grooves in the soil, after which slurry is guided from the slurry tanker down into the groove through a hose system. In the embodiment in fig. 1, the individual applicators 101 form two parallel grooves so that the slurry applicator overall injects slurry into thirty parallel grooves.

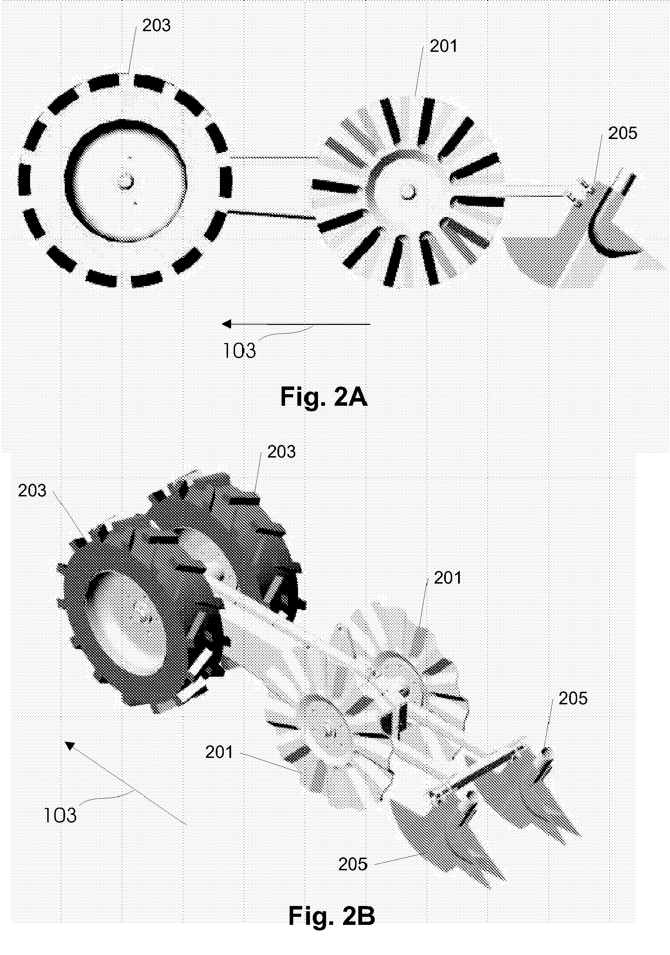

Figs. 2A and 2B are side elevational and perspective views, respectively, of an applicator 101. The applicator 101 comprises two profiled disc coulters 201 and a depth guide in form of two depth wheels 203. In addition, the applicator comprises an applicator shoe 205 filling slurry supplied from a slurry tanker down into the application groove (not shown). The disc coulter 201 rotates in the ground surface and thereby forms an application groove. In this connection, it is important that the disc coulter 201 rotates at a peripheral speed which is different from the forward travel speed 103, whereby the profiling of the disc coulter results in the formation of a porous application groove.

The depth to which the disc coulter 201 is lowered into the ground surface depends on the vertical position of the depth wheel 203 in relation to the disc coulter 201. The depth wheel 203 is shown with a tyre pattern which improves the grip of the wheel on the surface.

A way to ensure that the disc coulter 201 rotates at a peripheral speed lower than the forward travel speed is to use a braking assembly (not shown), such as a disc brake which reduces the speed. Alternatively, deceleration can take place hydraulically, or a gearing can be used, which is described later.

A way to ensure that the disc coulter 201 rotates at a peripheral speed higher than the forward travel speed is to use a hydraulic transmission (not shown). In addition, there can be a separate motor connected to the disc coulter 201 whereby the rotational speed can be controlled.

In connection with choosing the shapes and sizes of the profiled disc coulter 201, the aim is to come up with disc coulters that are best suited for specific jobs and types of soil. This could e.g. be disc coulters 201 which can be used as an all-round disc coulter 201 or it could be disc coulters that are optimised to specific jobs. The purpose of the profiling of the disc coulter 201 is to ensure that it is possible to spread 25-50 t of slurry per hectare into the grooves and ensure the maximum porosity of the groove.

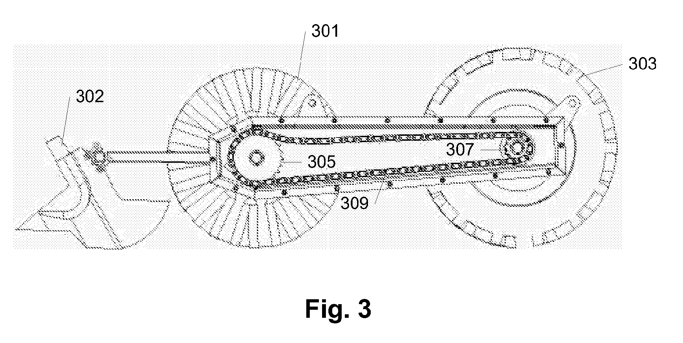

Fig. 3 shows an embodiment in which the peripheral speed of the disc coulter 301 is made different from the forward travel speed by using a gearing between the depth wheel 303 and the disc coulter 301. The gearing is obtained by mounting a first gearwheel in connection with the rotary axle of the disc coulter 301 and mounting a second gearwheel 307 in connection with the depth wheel 303. The two gearwheels are rotationally connected through a chain 309. When the applicator is drawn along the surface of the ground, it is obtained that the depth wheel rotates on the surface at a peripheral speed corresponding to the forward travel speed. As the diameter of the gearwheel 305 of the disc coulter is larger than the diameter of the gearwheel 307 of the depth wheel, the peripheral speed of the disc coulter will be slower than the forward travel speed. Thereby, it is obtained that the disc coulter 301 has a ploughing impact on the ground.

When the peripheral speed of the disc coulter is reduced, you have to make sure that crop residues are not dragged along. This is avoided by the fact that the disc coulter is still rotating and is not standing completely still as is the case with e.g. a harrow tooth. The gearing must ensure that the profiled disc coulter is given a ploughing effect so that the groove will be sufficiently porous, wide and deep for the slurry. The gearing must be able to be adapted to the specific job so that it will be possible to drive at e.g. ¾, ½ and ¼ of the forward travel speed of the applicator.

The power produced by the deceleration of the disc coulter could in one embodiment be transmitted to a drive shaft - pack roller so that the energy loss will be minimal.

In one embodiment, the applicator shoe 302 is formed in such a way that the uneven, porous groove is kept open and the slurry is placed correctly in the groove. It is intended to form a V-shaped unit which is robust against clogging and places the slurry deeply in the groove.

The height of the disc coulter and the applicator shoe can e.g. be controlled through coupling to a successive pack roller which also is intended for packing and closing the soil around the slurry. The height control must be adjustable, depending on how much slurry is to be injected and the type of soil in question.

## Claims

1. An applicator for forming at least one application groove in porous surfaces, wherein the applicator during operation has a forward travel speed along the surface, and wherein the applicator comprises at least one rotating, profiled disc coulter for forming the at least one application groove, **characterized in that** the least one disc coulter is mounted in such a way that it rotates at a peripheral speed which is different from the above forward travel speed.

2. An applicator according to claim 1, **characterized in that** the disc coulter rotates at a peripheral speed which is higher than the forward travel speed.

3. An applicator according to claim 1, **characterized in that** the disc coulter rotates at a peripheral speed which is lower than the forward travel speed.

4. An applicator according to claims 1-3, **characterized in that** the applicator furthermore comprises at least one rotating depth guide in form of a depth wheel or depth roller rotating on the surface.

5. An applicator according to claim 4, **characterized in that** the at least one depth guide and the at least one disc coulter are rotationally connected through a gearing.

6. An applicator according to claims 3-5, wherein the applicator comprises a braking assembly mounted so that it reduces the peripheral speed of the disc coulter so that the disc coulter rotates at a peripheral speed which is lower than the forward travel speed.

7. An applicator according to claims 1-6, **characterized in that** the disc coulter is profiled in a wave pattern.

8. An applicator according to claims 1-6, **characterized in that** the disc coulter is profiled in a zigzag pattern.

9. An applicator according to claim 8, **characterized in that** the distance from the top to the bottom of the profiling of the disc coulter varies so that the distance from the top to the bottom of said profiling is largest along the periphery of the disc coulter and the distance from the bottom of the profiles to the top of the profiles is reduced towards the centre of the disc coulter.

10. A slurry applicator for application of slurry, **characterized in that** the slurry applicator comprises an applicator according to claims 1-9.

11. A method for forming at least one application groove for application of material in porous surfaces, **characterized in that** an applicator according to any of the claims 1-9 is used.
